Europäisches Patentamt

(19) European Patent Office

Office européen des brevets

(11) Publication number: **0 461 081 A1**

## (12) EUROPEAN PATENT APPLICATION

(21) Application number: **91830194.6**

(22) Date of filing: **10.05.91**

(51) Int. Cl.⁵: **F02D 19/02, F02M 21/02, F16K 31/06**

(30) Priority: **22.05.90 IT 860890**

(43) Date of publication of application:
**11.12.91 Bulletin 91/50**

(84) Designated Contracting States:
**AT BE CH DE DK ES FR GB GR IT LI LU NL SE**

(71) Applicant: **M.T.M S.R.L.**
**Regione Oltre Tanaro 6/B**
**IT-12062 Cherasco (Cuneo) (IT)**

(72) Inventor: **Asteggiano, Matteo**
**c/o M.T.M. S.R.L., Regione Oltre Tanaro 6/B**
**I-12062 Cherasco (Cuneo) (IT)**
Inventor: **Costamagna, Mariano**
**c/o M.T.M. S.R.L., Regione Oltre Tanaro 6/B**
**I-12062 Cherasco (Cuneo) (IT)**

(74) Representative: **Righetti, Giuseppe**
**Bugnion S.p.A. Via Carlo Farini, 81**
**I-20159 Milano (IT)**

(54) **Regulating device of the flow rate of gaseous fuel in vehicles.**

(57)  The invention relates to a regulating device of the flow rate of gaseous fuel in vehicles. According to the invention, to avoid the inaccuracies of the mixing of gaseous fuel with the combustion air, which are common to the gaseous fuel feeding systems of traditional kind with a fixed flow rate register and to the systems provided with active control systems of the mixing and making use of a measuring probe (13) of the oxygen concentration in the exhaust gases, the regulating device is provided with a throttling element (12) of the flow cross section of the gaseous fuel which element can be used both in a passive and in an active way and which reduces the flow rate in a substantially linear way thanks to a throttling member (26) axially movable in the flow direction. For its active use, said element (12) is electromagnetically driven by a central control unit (16) in which the reference signal (R) corresponding to the optimum mixing is determined considering a plurality of characteristic variables of the operating conditions of the motor.

EP 0 461 081 A1

The invention relates to a regulating device of the flow rate of gaseous fuel, in vehicles provided with a gaseous fuel feeding system, like liquid propane or methane, comprising a tank for the gaseous fuel in its liquid phase, a following pressure reducer/vaporizer for the transition of the gaseous phase and a successive mixer of the gaseous fuel with the combustion air, some fixed calibration registers of the flow rate of gaseous fuel arranged upstream of the mixer.

Particularly, the invention relates to a reglating device of the flow rate of gaseous fuel in vehicles provided with a gaseous fuel feeding system of the above described kind, which is further provided with an active control and reglating system of the flow rate of gaseous fuel comprising an electromechanical control element of the gas flow rate which is preferably arranged between the pressure reducer/vaporizer and the mixer and which is driven by a control unit on the basis of the difference between the composition of the exhaust gases of the motor corresponding to an optimum mixture of the gaseous fuel with the air and the effective composition of the exhaust gases of the motor measured by a suitable probe, a so-called lambda probe, the probe being arranged in the exhaust manifold of the motor and connected to the control unit.

A high engine efficiency and an effective control of noxious emissions are based upon the correct dosing of the fuel. This correct dosing is difficult to be obtained during the various operating conditions of the motor. In fact, when the system is correctly regulated in conditions of medium flow rate of the gaseous fuel, for example by a fixed regulation register, the mixture usually trends to get poorer in conditions of full admission, while if the regulation is suitable for this last situation, the mixtre gets too rich in the other conditions with a resulting increased emission of noxious substances and with a higher consumption. When the motor is improved with a catalytic silencer, by optimizing the mixture, harmfull stains and overheating of the same are avoided, thus protecting its life.

A solution of the above mentioned problems has been tried providing an electrically variable regulating element of the flow rate of a gaseous fuel which is controlled by a control nit on the basis of the differences of the oxygen concentrations in the exhaust gases of the motor in relation to the stoichiometric ideal values. These concentrations are measured by means of suitable probes, so called lambda probes. In the gaseous fuel feeding-systems the lambda probe is located in the exhaust manifold and is connected to the control unit wherein the measured signals are compared with reference signals representing the desired nominal values corresponding to the oxygen concentration in the exhaust gases which can be achieved with a stoichiometrically optimum mixture. Control signals for the regulating element of the flow rate of the gaseous fuel are worked out from this comparison for optimizing the mixture.

These known systems generally do not solve completely the problem, because they do not consider further relevant variables which complicate the determination of the optimum mixing ratio of the gaseous fuel with the burning air and whose exclusion leads to the use of nominal reference values for correcting the mixing which does not correspond to the contingent operating conditions of the motor, consequently distorting a correction of the flow rate of gaseous fuel, too. These variables consist essentially in the rotational speed of the motor, in the temperature of the motor, in the altitude, in occasional obstructions of the air feeding lines and in the temperature itself of the air.

In addition to the above disadventage, the electromechanical flow rate regulating element which is actually in use, presents a throttling member, which reglates the gas flow-rate, reducing the size of the passage port of the feeding line to the mixer with a displacement transversal to the gaseous fuel flow. This fact determines disadvantageously a delay of the motor response to the various conditions, further reducing the precision of the regulation.

An object of the invention is to carry out a regulating device of the flow rate of a gaseous fuel in vehicles, through which, with a simple and economic construction, it is possible to obviate the disadvantages of the known devices, allowing an optimal regulation of the flow rate of the gaseous fuel in systems provided with a mixing control system or with a traditional construction.

According to the present invention the regulating device of the flow rate of gaseous fuel in vehicles is characterized in that it further comprises a variable throttling element of the passage port of a gaseous fuel feeding line, whose throttling member is suspended in an axially displaceable way, in flow direction and without friction and moreover in a progressive way between a position of complete closing of the passage port and a position of complete opening of the passage port, said throttling member being built in such a way to determine a variation of the flow cross section of the gaseous fuel in flow direction of the same and said throttling member being submitted to the action of two elastic elements in both opposite directions parallel to the flow direction each of said elastic elements acting preferably in the flow direction of the gaseous fuel and the other in the opposite direction thereto.

According to a preferred embodiment, the throttling member consists of tubular shaped obstructing slider which is closed at one of its head sides and open at the opposite one and which is provided with passage-openings for the gaseous fuel in the cylindrical surface of its terminal part associated with its closed head side. The obstructing slider is mounted in a coaxially displaceable way inside a tubular body of a corresponding shape whose terminal part associated with the closed side of the obstructing slider is built radially widened. At its head sides the tubular body is provided with internal annular shoulders, a helical spring being interposed between each shoulder and the respective head surface of the obstructing slider, while packing can be arranged or not at the head side of the tubular body associated with the closed head side of the tubular shaped obstructing slider, said closed head side of the obstructing slider adhering gastight to the packing in the position of complete closing.

According to a further characteristic of the invention, in order to use the throttling element in a system provided with an active control system of the mixing, the body of said element is built out of non-ferromagnetic material, such as for example brass, plastic material, or the like, while the throttling member is built out of ferromagnetic material, a control electromagnetic consisting in an annular winding coaxial to the tubular body being arranged outside said tubular body.

A further characteristic of the invention consists in that the control unit is provided with an input connection with a so-called lambda probe, and also with several inputs for the feeding of measured signals relating to further variables of importance for the determination of the correct mixing, as for example the number of revolutions of the motor, its temperature, the temperature of the air, etc.. The control unit is provided with means suitable to determine a reference signal for the nominal comparison value based upon said variables.

In the absence of electric commands, as for example in a gaseous fuel feeding system of traditional kind, the regulating device of the flow rate of the gaseous fuel helps the enrichment of the mixture of gaseous fuel and combustion air in conditions of high flow rates, compensating for the natural tendency of of the pressure reducer to cause a thinning of the mixture. This fact takes place in a passive way, thanks to the sole action of the gaseous fuel on the throttling member which, in trying always to remain in a condition of equilibrium through the helical springs, is driven by the flow of the gaseous fuel itself opposing the passing of the gaseous fuel itself a difference of pressure which is a linear function of the flow rate.

When, according to the above description, the regulating device is part of an active control system of the flow rate of the gaseous fuel, the flow rate itself can be varied by the activation of the electromagnet. In this case, unlike the known devices, the electromagnet is not directly used for the determination of a particular positioning of the throttling member, but to exercise on the same a force which acts on the equilibrium conditions of the throttling member and is superposed to the force of the flow of gaseous fuel, thus causing the flow rate variations. The response times are shorter than the transition times of the gaseous fuel and the burning times and moreover they are shorter than the analyzing times of the exhaust gases.

In connection with the fact of considering a notable number of further variables relevant for the determination of the stoichiometrically best mixture, with reference to the operating conditions of the motor, this considerable advantage guarantees an always correct feeding of the motor and thus a better exploitation, reducing both the consumption and the emission of gas or noxious substances.

An embodiment of the invention will he discribed more particularly in the following as a non-limiting example shown in the drawings, wherein:

    – Fig. 1 shows a diagram of the feeding circuit for the gaseous fuel, which is provided with an active control system of the regulation;

    – Fig. 2 shows a block diagram of the control unit of the throttling element of the regulating device according to the invention;

    – Figs. 3 and 4 show an axial section of the throttling element, respectively in the position of complete closing and in the one of complete opening;

    – Fig. 5 shows a sectioned perspective view of the throttling element according to Figs. 3 and 4.

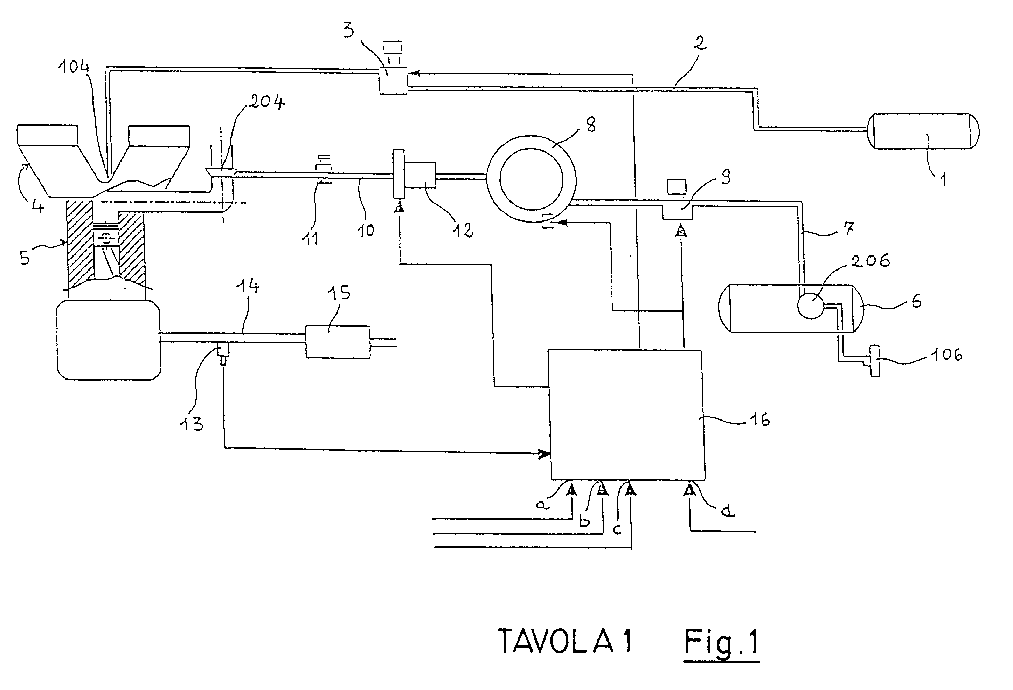

Referring to Fig. 1, the regulating device of the flow rarte of gaseous fuel in vehicles is shown in its embodiment suitable for its use in a feeding system for gaseous fuel with a control system of the flow rate. This feeding system for gaseous fuel is built in such a way that it can be used alternatively to a feeding system for gasoline, or the like.

The feeding system for the gasoline comprises a tank 1 which is connected to a mixer 4 through a feeding line 2, wherein is interposed an electrovalve 3. The mixer 4 and a motor 5 are shown in a schematic way. The mixer 4 shows an inlet 104 for the gasoline and an inlet 204 for the combustion air that must be mixed. The mixer 4 can be of any kind according to the purpose and of a known kind .

The feeding system for the gaseous fuel comprises a tank 6 for the gaseous fuel in its liquid phase and is provided with a charging inlet 106. The charging inlet 106 is connected to a charging and discharging unit 206, the so called multivalve, which generally shows a charging valve and a distribution valve for the gaseous fuel. A gaseous fuel feeding line 7 starts from the multivalve 206, and is connected, by the interposition of an electrovalve 9, to a pressure reducer/vaporizer 8, wherein the gaseous fuel is obliged to turn from the liquid phase into the gaseous phase. The pressure reducer/vaporizer 8 is connected through a pipe 10 to the inlet 204 for the combustion air of the mixer 4, the pipe 10 is provided with a fixed register 11 of the flow rate of the gaseous fuel and an adjustable throttling element 12 that forms the flow rate regulating element of the gaseous fuel of the device according to the invention that will be described more particularly in the following.

The active control system of the flow rate of gaseous fuel and thus of the mixture comprises a probe 13, a so-called lambda probe, which is arranged in an exhaust manifold 14 of the motor 5 upstream of a silencer 15. This probe 13 measures the oxygen concentration in the exhaust gases, which is a vale that depends on the mixtre ratio between the gaseous fuel and the combustion air. The probe 13 is connected to an input of an electronic control unit 16, which in connection with the throttling element 12 forms an active flow rate regulating device.

The throttling element 12, i.e. the electromagnet winding, is connected to an output of the control unit 16. According to its regulating function of the flow rate of the gaseous fuel, the unit 16 further shows a plurality of inputs a - c, which are destined to the input connections of an equal number of measuring probes of the further variables which are relevant for the elaboration of the stoichiometrically optimum mixture, and thus to the command of the throttling element 12. These variables are particularly the revolution number of the motor, the position of the accelerator, the temperature of the cooling liquid. Further, the input d is used for entering a manual calibration.

In addition to the regulation function, the unit can also execute the commutation function of the feeding of the motor 5 between the feeding system of the gaseous fuel and the feeding system of the gasoline, this is due to the fact that the electrovalves 3, 9 arranged in the feeding lines of the respective feeding systems are connected to it.

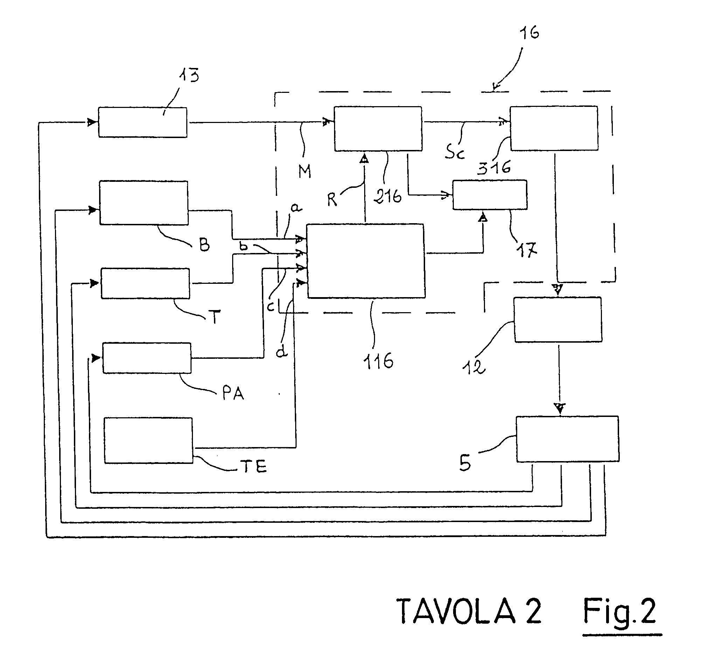

An embodiment of the unit 16 is shown with more details in the block diagram according to Fig. 2. The signals received from the motor 5 and concerning the temperature T of the water of the motor, the position of the accelerator PA and the ignition coil B, and moreover the external calibration TE are fed to a reference level generator 116 which elaborates a reference signal R feeding a comparison and control circuit 216 to which the lambda probe 13 is connected, i.e. the measured signal M. A control signal SC is elaborated in the comparison and control circuit 216 in accordance with the difference between the reference signal R and the measured signal M emitted by the probe 13, the control signal SC being fed to the throttling element 12 after a previous amplification in a power end-stage 316. The reference signal R and the measurement signal M are also commutable in values intelligible to the user and they can be shown with an appropriate display 17 which is connected to the comparison and control circuit 216.

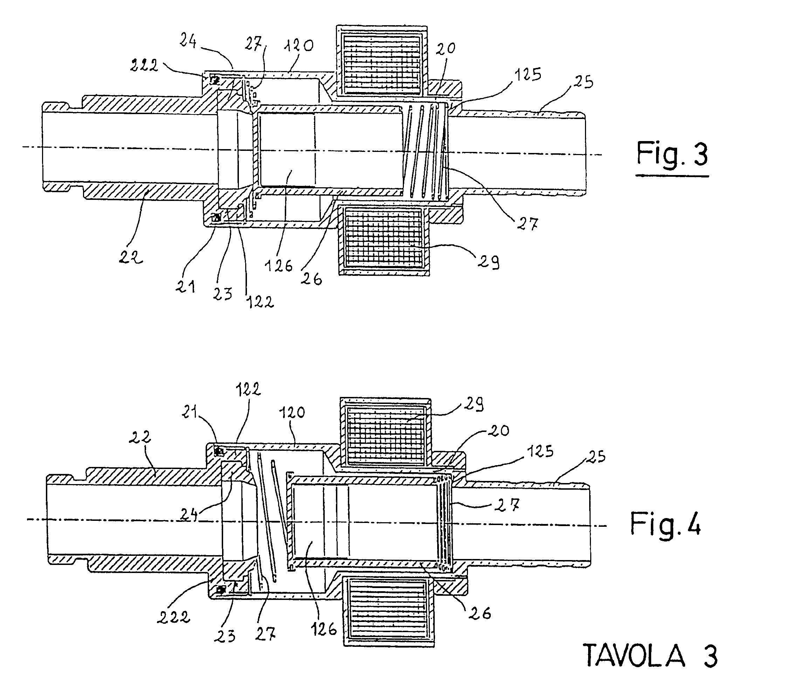

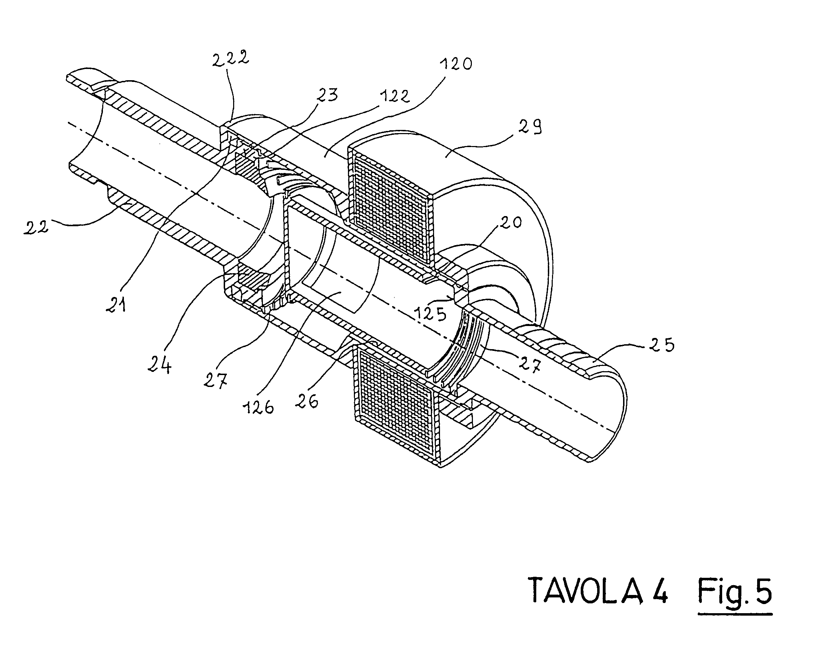

According to the embodiment shown in Figs. 3 to 5, the throttling element 12 comprises a tubular cylindrical body 20, one of its terminal parts 120, particularly the one at the inlet side of the gaseous fuel, being built radially widened. An inlet union pipe 22 is tightly connected to said widened terminal part 120 by means of a packing 21. In addition to its coupling flange 222, the inlet union pipe 22 shows an axial extension 122, which penetrates into the terminal part 120 forming an annular shoulder with its head side edge. A housing seat 23 for an annular packing 24 is placed at the inner side of the axial extension 122 of the inlet union pipe 22. The end of the tubular body 20 opposite to the widened terminal part 120 is joined, preferably is integral, to an outlet union pipe 25, forming an annular shoulder 125.

An obstructing slider 26 forming the throttling element is mounted inside the tubular body 20 in a movable way in both the directions and coaxially to the body 20, i. e. in the flow direction of the gaseous fuel. The obstructing slider 26 is of tubular shape and has a diameter corresponding substantially to the inner diameter of the tubular body 20 and it is closed at its head side associated with the widened terminal part 120 of the tubular body 20 and it is open at its opposite head side. In the zone which is directly adjacent to the closed head side, the obstructing slider 26 shows openings 126 for the gaseous fuel, said openings extend axially so that they are slightly shorter than half of the slider length. A helical spring 27, having linear characteristics of elasticity, is interposed between each end side of the obstructing slider 26 and the corresponding end side of the tubular body 20, i. e. the annular shoulder 125 and the head side edge of the axial extension 122 of the inlet union pipe 22. The opposite actions of the two helical springs 27 on the obstructing slider 26 help to keep the obstructing slider always in a condition of stable equilibrium, also when said obstructing slider is subjected to the pressure action of the flow of the gaseous fuel which is exercised substantially on its closed head side. The springs 27, the length of the obstructing slider 26 and the size of the openings 126 are dimensioned in such a way as to allow a sliding of the obsturcting slider from a position of the throttling element 12 of complete closing in a position of maximum opening. These positions are shown in Figs. 3 and 4. In the position of the throttling element 12 of complete closing, the obstructing slider 26 adheres tightly with its closed head side to the annular packing 24 which is housed in the inlet union pipe 22. In the position of maximum opening the obstructing slider 26 is in the opposite end position, wherein the spring 27 associated with the outlet union pipe 25 is completely compressed and the slider substantially meets the annular shoulder 125. In the position of maximum opening and in the intermediate positions the flow of gaseous fuel enters into the throttling element 12 through the inlet union pipe 22 and is able to penetrate into the obstructing slider 26 through the openings 126 thanks to the widened part 120 and thus reaching the outlet union pipe 25.

Thanks to the linear characteristic of the springs 27, the obstructing slider 26 opposes the passing of the gaseous fuel a pressure difference that depends in a linear way on the flow. In passive conditions, the obstructing slider 26 places itself in such a way that it always finds itself in stable equilibrium in each operating condition of the motor. The different equilibrium positions of the obstructing slider 26 are determined by the flow of the gaseous fuel, i. e. by its action on the obstructing slider 26, so that in the case of a greater suction of gaseous fuel by the motor the obstructing slider 26 supports the suction allowing a greater inflow of gaseous fuel and compensating for the natural tendency of the pressure reducers to let the mixture grow poorer.

According to a further characteristic, a winding of copper wire 29, forming a control electromagnet of the throttling element 12 is arranged outside the tubular body 20, being preferably slipped on this last one. The annular winding 29 is connected to the control output of the electronic unit 16. In this case, the tubular body 20 and its widened part 120 must be made of non-ferromagnetic material, as for example brass, plastic material, etc. The obstructing slider 26 is built of ferromagnetic material. Thanks to this arrangement the electromagnet is not used to determine the positioning of the obstructing slider 26 but it exercises only a well-determined force on the slider 26. This force exercised on the slider 26 is oriented in the flow direction of the gaseous fuel and is used to vary the global force with which the slider 26 opposes the flow of gaseous fuel, thus correcting the pressure difference determined by the throttling element 12 and consequently also the flow rate. The response times of the throttling element 12 are practically zero as compared with the times necessary for the passage and the burning of the gaseous fuel and for analysing the exhaust gases. A further advantage consists in the fact that in the condition of complete closing of the throttling element 12 also the last stage of the pressure reducer/vaporizer is closed. This fact allows the electrovalve usually placed on the pressure reducer to be eliminated.

Obviously the invention is not limited to the embodiment which is the object of the present description but it is understood as extended to all the embodiments that take origin from the same inventive concept.

## Claims

1. A regulating device of the flow rate of gaseous fuel in vehicles provided with the gaseous fuel feeding system, like liquid propane or methane, comprising a tank (6) for the gaseous fuel in its liquid phase, a following pressure reducer and vaporizer (8) for the transition of the gaseous fuel from the liquid phase to the gaseous phase and the successive mixer (4) of the gaseous fuel with the combustion air, some fixed calibration registers (11) of the flow rate of the gaseous fuel arranged upstream of the mixer (4), characterized in that the regulating device further comprises a variable throttling element (12) of the passage port of a gaseous fuel feeding line (10), whose throttling member (26) is suspended in an axially displaceable way, in flow direction and without friction and moreover in a progressive way between a position of complete closing of the passage port and a position of complete opening of the passage port, said throttling member finding itself always in a state of stable equilibrium in each operating condition of the motor and said throttling member (26) being built in such a way as to determine a variation of the flow cross section of the gaseous fuel in flow direction of the same and said throttling member (26) being submitted to the action of two elastic elements (27) in both opposite directions parallel to the flow.

2. A device according to claim 1, characterized in that the elastic elements (27) show substantially linear characteristics of elasticity.

3. A device according to claims 1 or 2, characterised in that the throttling member (26) shows a surface transversally oriented with respect to the flow direction of the gaseous fuel, said surface being movable to and away from an inlet opening for the gaseous fuel in a chamber (120) with a bigger diameter than the throttling member (26), said opening being provided or not with a packing (24) destined to cooperate with the surface of the throttling member (26) which is transversal to the flow of gaseous fuel in the closing position of the throttling element (12).

4. A device according to one or more of claims 1 to 3, characterized in that the throttling member is formed by a tubular obstructing slider (26) which is provided with an open head side and a closed head side, said obstructing slider (26) being slidably mounted without friction and coaxially to the same in a tubular body (20) provided with a radially terminal part (120) widened at its inlet side of the gaseous fuel, with its closed head side associated with the widened terminal part (120), while said throttling member is provided with opening (126) for the passage of the gaseous fuel in the cylindrical surface of the obstructing slider (26) which openings are directly adjacent to the closed head side and in the zone of the radially widened terminal part (120).

5. A device acording to claim, characterized in that the tubular body (20) shows an annular inner shoulder at the extremity on the head side of its radially widened part (120) and a further annular shoulder (125) at its extremity at the opposite head side, on its oulet side of the flow of gaseous fuel, a helical spring (27), preferably with linear characteristics of elasticity, and the respective head sides of the obstructing slider (26).

6. A device according to claim 5, characterised in that the annular shoulders are formed by the head side edges respectively of an inlet union pipe (22) and an oulet union pipe(25).

7. A device according to one or more of the preceding claims, characterised in that the inlet union pipe (22) shows an axial extension (122) of the coupling flange (222) with the radially widened terminal part (120) of the body (20), said extension is placed inside said terminal part (120) in an assembled condition, the annular shoulder which supports the helical spring (27) being formed by said head side edge of said axial extension (122) and the possibly existing packing (24) cooperating with the closed head side of the obstructing slider (26), which packing is housed in a seat (23) on said axial extension.

8. A regulating device of the flow rate of the gaseous fuel in vehicles provided with a gaseous fuel feeding system according to the preamble of claim 1 and which system further comprises an active control and regulating system of the flow rate of the gaseous fuel comprising an electromechanical control element of the gas flow rate, which element is preferably arranged between the pressure reducer/vaporizer (8) and the mixer (4) and is driven by a central control unit (16) on the basis of the difference between the composition of the motor exhaust gases corresponding to an optimum mixing of the gaseous fuel with the air and the effective composition of the motor exhaust gases being measured by means of an appropriate probe (13), a so-called lambda probe, said probe is arranged in the exhaust manifold (14) of the motor (5) and is connected to the central control unit (16), characterized in that a throttling element (12) according to claims 1 to 7 is used as an electromechanical element of the flow rate of the gaseous fuel, the body (20) and the relating radially widened part (120) being made out of non-ferromagnetic material and the throttling member (26) being made of ferromagnetic material, while an annular electromagnet winding (29), which is electrically connected to the central control unit (16), is coaxially slipped on the tubular body (20).

9. A device according to claim 8, characterized in that in order to control the throttling element (12), the central control unit (16) is provided with inputs (a - c) for the connection of measuring sensors of further variables of the operating conditions of the motor (5) which are determinant to define the stoichiometrically optimum mixing of the gaseous fuel with the combustion air, as for example the number of revolutions of the motor (5), its temperature, the temperature (T) of the cooling water, the air temperature, the altitude, the air inflow, etc..

10. A device according to claims 8 and 9, characterized in that the central control unit (16) comprises a generator (116) of a reference signal (R) corresponding to the stoichiometrically optimum mixing, the generator being connected to the ignition coil (B) and to the sensors of the temperature (T) of the water of the motor, of the position of the accelerator (PA) and moreover being connected to an external calibration member (TE), a compensating and control circuit (216) which is connected to the generator (116) of the reference signal (R) and to the probe (13) for the measured signal (M) and which emits a control signal (SC) based upon the difference between the reference signals (R) and the measured signals (M), the control signal (SC) being fed to the electromagnet winding (29) of the throttling element (12) after a previous amplification by a power end-stage (316).

11. A device according to claim 10, characterized in that the central control unit is provided with a display (17) connected to the comparing and control circuit (216) for indicating the reference signals (R) and the measured ones (M) in an intelligible form for the user.

12. A device according to one or more of the preceding claims 8 to 11, characterized in that said device can be used in a gaseous fuel feeding system activable alternatively to a gasoline feeding system, or similar, the central control unit (16) being provided with control members of the commutation electrovalves (3, 9) for changing from the feeding of gaseous fuel to the feeding of gasoline.

TAVOLA 1    Fig.1

TAVOLA 2    Fig.2

Fig. 3

Fig. 4

TAVOLA 3

TAVOLA 4   Fig.5

**European Patent Office**

# EUROPEAN SEARCH REPORT

Application Number

EP    91 83 0194

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-84219 (SOLEX (U.K.) LIMITED)<br>* page 1, line 1 - page 4, line 6 *<br>* page 15, line 10 - page 16, line 17 *<br>* page 25, line 16 - page 26, line 24; figures 1, 4 * | 1 | F02D19/02<br>F02M21/02<br>F16K31/06 |
| A | EP-A-121028 (THE BENDIX CORPORATION)<br>* page 4, line 17 - page 6, line 27 *<br>* page 12, line 13 - page 13, line 32; figures 1, 2 * | 1 | |
| A | EP-A-71588 (O.M.T. OFFICINA MECCANICA TARTARINI)<br>* page 4, line 7 - page 5, line 15; figures 1, 2 * | 1 | |
| A | EP-A-29661 (INGERSOLL-RAND COMPANY)<br>* page 3, line 18 - page 5, line 9; figures 1, 3 * | 1 | |
| A | GB-A-566211 (THE BRITISH THERMOSTAT COMPANY LIMITED) | | TECHNICAL FIELDS SEARCHED (Int. Cl.5) |
| A | GB-A-1357552 (VYZKUMNY USTAV AUTOMATIZACNICH PROSTREDKU) | | F02D<br>F02M<br>F16K |

The present search report has been drawn up for all claims

| Place of search | Date of completion of the search | Examiner |
|---|---|---|
| THE HAGUE | 20 AUGUST 1991 | ALCONCHEL Y UNGRIA J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)